# EUROPEAN PATENT SPECIFICATION

(11) **EP 1 440 499 B1**
(45) Date of publication and mention of the grant of the patent: **03.05.2017**
(21) Application number: 02772435.0
(22) Date of filing: 30.10.2002
(51) Int. Cl.: H02K 7/09, F16C 39/02

(54) **A METHOD FOR ARRANGING AN ELECTRIC MACHIME ON BEARINGS, AND A BEARING ASSEMBLY OF AN ELECTRIC MACHINE**
VERFAHREN ZUR ANORDNUNG EINER ELEKTRISCHEN MASCHINE AUF LAGERN UND LAGERBAUGRUPPE EINER ELEKTRISCHEN MASCHINE
PROCEDE PERMETTANT D'AGENCER UNE MACHINE ELECTRIQUE SUR DES PALIERS ET ASSEMBLAGE DE PALIERS D'UNE MACHINE ELECTRIQUE

(30) Priority: 31.10.2001 FI 20012105
(43) Date of publication of application: 28.07.2004
(73) Proprietor: Sulzer Management AG, 8401 Winterthur (CH)
(72) Inventor: LIIKKANEN, Matti, FIN-53650 Lappeenranta (FI)
(74) Representative: Intellectual Property Services GmbH
(86) International application number: PCT/FI2002/000842
(87) International publication number: WO 2003/038973

(56) References cited:
- DE-B- 1 525 067
- US-A- 4 926 493
- US-A- 5 752 774

## Description

The present invention relates to a trunnion bearing assembly for the safety bearing of a high-speed electric machine, which high-speed electric machine comprises a rotor arranged to be rotatable, a stator, and at least one contactless bearing for the bearing during the operation of the high-speed electric machine, which trunnion bearing assembly comprises at least three rotationally symmetrical bearing means which are mounted on bearings in relation to their centre of rotation, and that said at least three rotationally symmetrical bearing means are placed around a shaft substantially symmetrically so that the centre of rotation of the bearing means is placed on the circumference of substantially the same circle in such a way that the diameter of the largest imaginary circle inside the bearing means is greater than the diameter of the shaft at the bearing means. The invention also relates to a high-speed electric machine which comprises a trunnion bearing assembly for the safety bearing of the electric machine, a rotor arranged to be rotatable, a stator, and at least one contactless bearing for the bearing during the operation of the high-speed electric machine, which trunnion bearing assembly comprises at least three rotationally symmetrical bearing means which are mounted on bearings in relation to their centre of rotation, and that said at least three rotationally symmetrical bearing means are placed around a shaft substantially symmetrically so that the centre of rotation of the bearing means is placed on the circumference of substantially the same circle in such a way that the diameter of the largest imaginary circle inside the bearing means is greater than the diameter of the shaft at the bearing means. Further, the invention relates to a method for the safety bearing of a high-speed electric machine by means of a trunnion bearing assembly, which high-speed electric machine comprises a rotor arranged to be rotatable, a stator, and at least one contactless bearing for the bearing during the operation of the high-speed electric machine, in which method the trunnion bearing is arranged with at least three rotationally symmetrical bearing means which are mounted on bearings in relation to their centre of rotation, and that said at least three rotationally symmetrical bearing means are placed around a shaft substantially symmetrically so that the centre of rotation of the bearing means is placed on the circumference of substantially the same circle in such a way that the diameter of the largest imaginary circle inside the bearing means is greater than the diameter of the shaft at the bearing means.

In particular, high-speed electric machines are known, which apply magnetic bearings to keep the rotating rotor of the electrical machine in a desired position during the rotation of the rotor. The operation of the magnetic bearing is based on force effects on the rotor, to be produced by magnetic fields. Passive bearing implemented by permanent magnets is normally used in the construction of instruments only. In industrial applications, an electrically controlled active magnetic bearing is used, in which a control device controls the current to be supplied to the electrical magnets in such a way that the force effective on the ferromagnetic piece keeps it floating in a contactless manner. It is thus a so-called contactless bearing to minimize the friction and wearing between the rotor shaft and the bearing.

However, during its rotation, the rotor may be subjected to sudden force effects which are difficult to compensate for by magnetic bearings only. This involves the risk that the rotor may touch the stator, the magnetic bearing or another part of the electric machine. Particularly in high-speed motors, this impact may cause breaking of the electric machine. To prevent such damage, electric machines with magnetic bearings are normally provided with a trunnion bearing assembly to prevent the cause of damage or at least to significantly reduce the risk of causing damage. Furthermore, the trunnion bearing assembly prevents the impact between the stator and the rotor when the magnetic bearings are turned off, *e.g*. when the electric machine is stopped. Also, the trunnion bearing assembly is responsible for the bearing of the rotor during the stopping of the rotating motion of the rotor in failure situations, such as power failures or damage to the magnetic bearing assembly. The trunnion bearing is typically a bearing based on contact, such as a slide bearing or a ball bearing.

The trunnion bearing assembly should be provided with a suitable clearance to the rotor during the normal operation. Known trunnion bearing arrangements in association with magnetic bearings include structures of the slide bearing type, either unlubricated or provided with the supply of a lubricant. One example of such a bearing arrangement is disclosed in US patent 5,355,040. It is also possible to use conventional roller bearings, or a combination of the roller and slide bearings, as presented *e.g*. in US patent 5,272,403. From other fields of technology, it is known to use a support-roll type bearing for the bearing of solids of revolution. Examples of such devices to be mentioned include horizontal revolving furnaces, in which the loading direction is almost constant and the rotational speeds are low.

The implementation of a well-functioning trunnion bearing assembly involves several problems. Causes for the problems include *e.g*. the high rotational speeds which are commonly used in machines with magnetic bearings, as well as the clearance which is required between the trunnion bearing and the rotor for functional reasons and which is often distinctly greater than the clearance that is normally used e.g. in slide bearing arrangements. Furthermore, it is often preferable to provide the fast revolving rotor with a large diameter, wherein also the peripheral speed of the bearing points becomes high (>100 m/s) and the allowable rotational speeds of the roller bearings with suitable dimensions remain low. When the dimensions of the roller bearings are increased, their structural clearances are also increased. This will cause further problems in setting the clearance for the device. When the dimensions of the roller bearings are increased, also their mass inertia and frictional couple is increased, which are both disadvantageous for the acceleration and operation of the bearing. Furthermore, when the machine with magnetic bearings is free from lubricants in other respects, it is undesirable to use lubricants in the trunnion bearings.

In radial bearing arrangements of the slide type, the friction between the rotor and the bearing will easily become high. The development of a high frictional force on the perimeter of the rotor will involve the rotor in a rotary motion which is determined according to the trunnion bearing. In this rotary motion, the centre of the rotor orbits a circular path which causes centrifugal forces on the rotor. In view of the operation of the radial-type trunnion bearing assembly, it is advantageous if the rotational speed of the rotor on the path limited by the trunnion bearing remains as low as possible. If the rotational speed increases to a high level, it will often lead to radial forces which are so great that they are difficult to control.

US patent 5,752,774 discloses an arrangement to eliminate the radial clearance between the rotor and the trunnion bearing, when the rotor shaft touches the trunnion bearing assembly. The aim of that invention was to eliminate problems occurring in the application of so-called conventional arrangements, such as impacts and the involvement of the rotor in such a rotary motion which does not take place around the centre of the rotor. In said publication, the aim is to reduce the effect of impacts by means of various attenuator arrangements. The involvement in a rotary motion, in turn, is prevented by eliminating the clearance between the bearing means and the rotor. The elimination of the clearance between the rotor and the trunnion bearing, implemented according to the basic principle of the publication, requires the use of bearing means fitted to be movable.

In high-speed motors, the high rotational speed of the rotor sets further special requirements on the rotor construction and on the bearing assembly, of which the most important ones will be discussed in the following. When the aim is to achieve as high a criticial rotational speed of the first order as possible, the shaft must be made as short and with as large a diameter as possible. Thus, the diameters become so large that when the roller bearing is selected on these grounds, the allowable rotational speed of the trunnion bearing remains low and it is thus not suitable for high-speed applications. Furthermore, if both ends of the shaft are already in use, it is not advantageous to provide the ends of the rotor with an axial bearing.

The geometry of the radial bearing must be designed so that it will resist the shifting of the rotor to a moving state, in which it rotates both around its own central shaft and simultaneously said central shaft orbits a circular path, causing high centrifugal forces.

It is an aim of the present invention to eliminate the above-mentioned drawbacks to a great extent and to improve the state of art. The present invention is based on the idea that the bearing means are rotationally symmetrical pieces mounted on bearings at their centres. To put it more precisely, the bearing structure according to the invention is primarily characterized in that at least some of the centres of rotation of the bearing means are arranged in substantially constant locations in the trunnion bearing assembly, and at least some of the bearing means are arranged to limit the movement of the shaft in the axial direction, and that the bearing means limiting the movement in the axial direction comprise at least a first set of bearing means in such a way that the centre of rotation of the first set of bearing means is placed in substantially the same first plane. The high-speed electric machine according to the invention is primarily characterized in that at least some of the centres of rotation of the bearing means are arranged in substantially constant locations in the trunnion bearing assembly, and that at least some of the bearing means are arranged to limit the movement of the shaft in the axial direction, and that the bearing means limiting the movement in the axial direction comprise at least a first set of bearing means in such a way that the centre of rotation of the first set of bearing means is placed in substantially the same first plane. Furthermore, the method according to the invention is primarily characterized in that in the method, at least some of the centres of rotation of the bearing means are arranged in substantially constant locations in the trunnion bearing assembly, and at least some of the bearing means are used to limit the movement of the shaft in the axial direction, and that of the bearing means limiting the movement in the axial direction, at least a first set of bearing means is provided, whose centre of rotation is located substantially in the same first plane.

The present invention shows remarkable advantages over solutions of prior art. By means of the arrangement according to the invention, the axial bearing can be placed relatively freely, which makes it possible, for example, to provide an advantageous location for the centre of thermal movements. The invention also provides freedom in view of the operational position of the electric machine. In addition, by the layout geometry of the bearings according to the invention, it is possible to resist the shifting of the rotor to the moving state, in which it rotates around its own central shaft and the central shaft simultaneously orbits a circular path. Thus, centrifugal forces caused by the circular movement of the above-mentioned type will not develop to such an extent as in arrangements of prior art. The contact surfaces of the trunnion bearings are preferably made of a material of small friction, which will reduce e.g. the heating and wearing of the bearings. In an arrangement according to an advantageous embodiment of the invention, the contact surfaces are formed of rollers mounted on bearings in relation to the centres of rotation, which can also be used to reduce the friction. Furthermore, the arrangement according to the invention makes it possible that the same bearing assembly may comprise both axial bearings and radial bearings. Thus, the layout of the bearings becomes simpler, because no separate bearings will be needed for the trunnion bearing assembly in the axial direction and in the radial direction.

In the following, the invention will be described in more detail with reference to the appended drawings, in which
- Fig. 1a: shows a trunnion bearing according to an advantageous embodiment of the invention, seen from the end of the shaft and in a partly sectional view,
- Fig. 1b: shows the trunnion bearing of Fig. 1 a in a partial cross-section, seen from the side,
- Fig. 2a: shows a trunnion bearing according to a second advantageous embodiment of the invention, seen from the end of the shaft and in a partly sectional view,
- Fig. 2b: shows the trunnion bearing of Fig. 2a in a partial cross-section, seen from the side,
- Fig. 3a: shows a trunnion bearing according to a third advantageous embodiment of the invention, seen from the end of the shaft and in a partly sectional view,
- Fig. 3b: shows the trunnion bearing of Fig. 3a in a partial cross-section, seen from the side,
- Fig. 4: shows, in a reduced partial cross-sectional view, an electric machine applying the trunnion bearing assembly according to the invention,
- Fig. 5: shows a principle view of a polygon limiting the path of movement of the centre of the rotor in an electric machine according to an advantageous embodiment of the invention,
- Fig. 6a: shows a trunnion bearing according to a fourth advantageous embodiment of the invention, seen from the end of the shaft and in a partly sectional view, and
- Fig. 6b: shows the trunnion bearing of Fig. 6a in a partial cross-section, seen from the side.

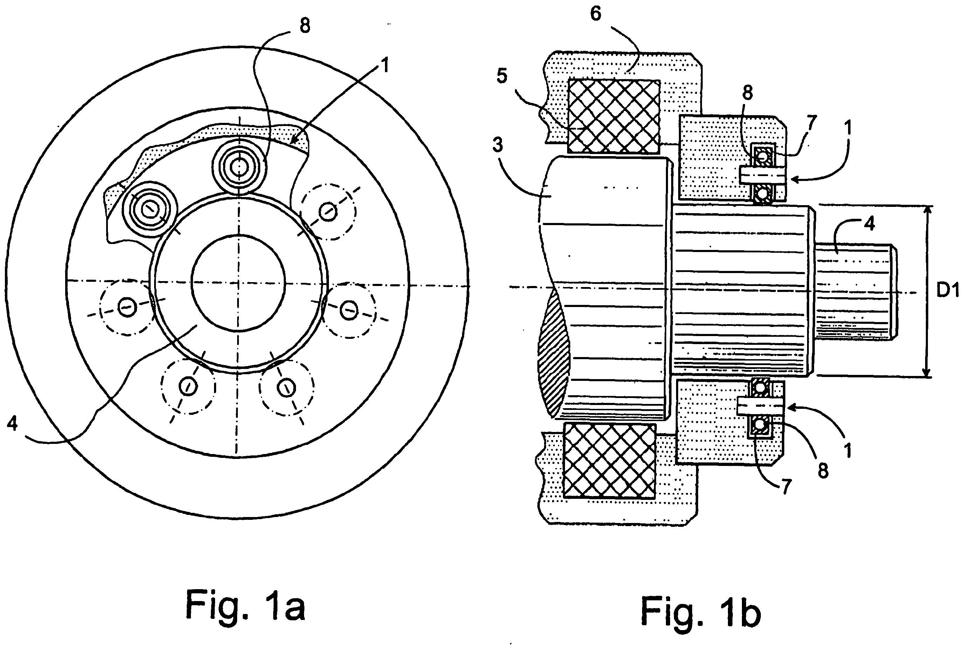

We shall next describe the structure of a trunnion bearing 1 according to an advantageous embodiment of the invention, implemented in connection with a high-speed electric machine, with reference to Figs. 1a and 1b. The rotor 3 of the electric machine 2 comprises a shaft 4. For operating situations, the rotor 3 is mounted on contactless bearings, such as magnetic bearings 5. Thus, the magnetic bearings 5 are controlled during the operation of the electric machine 2 in such a way that the shaft 4 is kept as stable as possible so that the rotor does not touch the stator 6. However, the rotor 3 may be subjected to force effects which cause the rotor 3 to be displaced from this centre. For this reason, the electric machine is provided with one or more trunnion bearings 1. The trunnion bearing shown in Figs. 1a and 1b is intended to eliminate the effect of deviations in the radial direction preferably as follows. The trunnion bearing 1 comprises bearing means 7, such as rollers, mounted on bearings in relation to the centres of rotation which remain in substantially constant positions. In the mounting of the bearing means 7, it is possible to use, for example, ball bearings or other arrangements of the roller bearing type, wherein the outer race of the bearing is used as the roller, and the bearing is arranged by means of balls 8 or the like, as is shown in the cross-sectional view of Fig. 1b. The bearing means 7 are preferably placed in such a way that the centres of rotation of the bearing means are placed on the circumference of substantially the same circle. The diameter of this circle is selected so that the diameter of the largest imaginary circle inside the bearing means system of the trunnion bearing 1 is greater than the diameter D1 of the shaft at the trunnion bearing 1. The shaft 4 is thus in contact with a maximum of two bearing means 7. The centre of rotation of the bearing means 7 will remain in a substantially constant position, irrespective of whether the shaft 4 is in contact with said bearing means or not. Furthermore, these bearing means 7 limit the movement of the rotational centre of the shaft in such a way that the largest path of the rotational centre of the shaft is not a geometrical circle but a polygon. When the rotational movement is smaller than the polygon limited by the bearing means, the rotational movement can also be a circle, but the diameter of this circle is so small that the centrifugal force caused by the rotary motion is not harmfully great. In the trunnion bearing 1 of Fig. 1a, there are seven bearing means 7 placed at even intervals, wherein the rotational centres of the bearing means 7 are located on the circumference of the circle at intervals of about 51.4°. However, it will be obvious that the invention is not limited solely to such trunnion bearings, but the number of bearing means 7 may vary in different applications.

The high rotational speed of the rotor 3 sets certain special requirements on the structure of the trunnion bearing 1. The mass inertia and the frictional couple of the bearing means 7 should be reduced to a minimum. Thus, when the shaft 4 of the rotor 3 rotating at a high speed touches a bearing means 7 of the trunnion bearing 1, this bearing means will start to rotate. Thanks to the small mass inertia, the bearing means will relatively fast achieve a rotational speed which corresponds to the rotational speed of the shaft, wherein the thermal effect of the frictional force caused by the difference in speed between the shaft 4 and the bearing means 7 is relatively short in time. Furthermore, the low frictional couple will also reduce the heating of the shaft 4 and the bearing means 7, when the rotational speed of the bearing means 7 is lower than the rotational speed of the shaft 4 touching the bearing means 7. Known bearing means 7 with very low friction include *e.g*. ball bearings, single-row angular ball bearings, and radially loaded cylindrical roller bearings with holders. However, it will be obvious that the present invention is not limited solely to apply the bearing means mentioned herein.

A small clearance must be left between the rotor 3 and the trunnion bearing, wherein the magnitude of this clearance will affect, for example, the number of bearing means 7 in the trunnion bearing 1. The number of bearing means is preferably selected so that the rotor 3 and its shaft 4 will not, in any situation during the operation of the high-speed machine, come to touch anything but the bearing means 7 of the trunnion bearing.

The trunnion bearing 1 can be integrated in a single unit which comprises the necessary bearing means and a supporting structure 9 to keep the bearing means in place. This trunnion bearing 1 is coupled, for example, to the end part of the electric machine 2, wherein the trunnion bearing forms a through hole for the shaft 4. The shaft 4 can thus be coupled to a desired transmission mechanism (not shown) in a way known as such. The radial trunnion bearing 1 according to the invention is preferably arranged at each end of the shaft. However, it is obvious that the trunnion bearing according to the present invention can also be placed at another point on the shaft 4, or the number of trunnion bearings can also be one or greater than two.

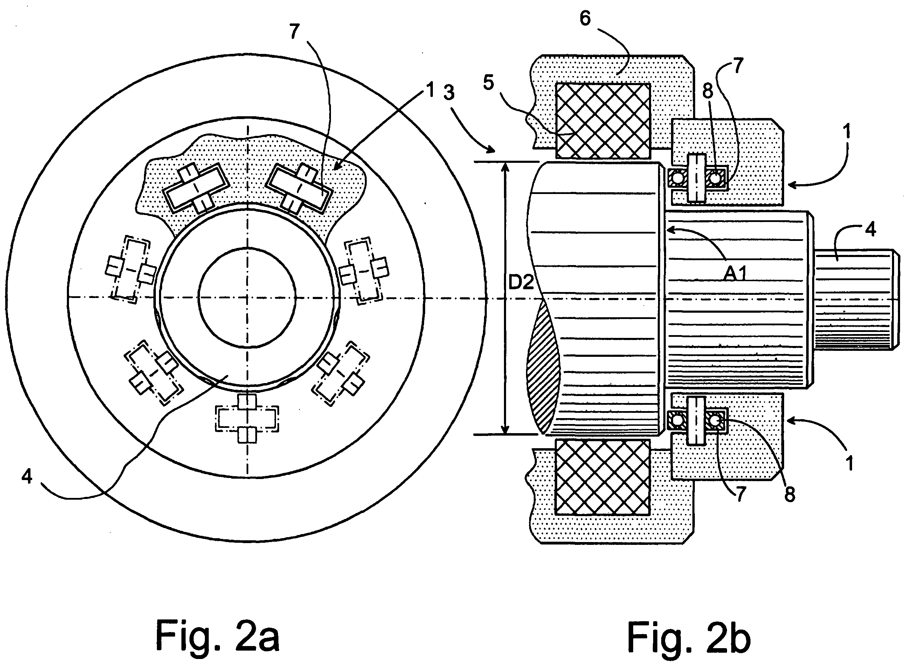

Figures 2a and 2b show a trunnion bearing 1 according to a second advantageous embodiment of the invention. This axial trunnion bearing 1 is, to a great extent, similar to the radial trunnion bearing shown in Figs. 1 a and 1 b. Also this axial trunnion bearing 1 comprises bearing means, such as bearing means 7. These bearing means are mounted on bearings at their centre, which remains in a substantially constant location, for example by roller bearings. In this embodiment, the bearing means 7 are placed on the circumference of a circle in such a way that the centres of rotation are placed in the same plane which is substantially perpendicular to the axial direction of the rotor 3. The shaft 4 is preferably provided with at least one gradation, wherein the shaft comprises at least one planar surface A1 in addition to the ends. The diameter of the imaginary circle used in the layout of the bearing means 7 is thus smaller than the diameter D2 of the planar surface A1 formed in the shaft 4 of the rotor. The trunnion bearing 1 is placed close to said planar surface A1. Thus, when the rotor moves towards the trunnion bearing in the axial direction, the clearance between the bearing means of the trunnion bearing and said planar surface A1 is reduced, until the planar surface A1 of the shaft touches the bearing means. As a result of this contact, the rotating movement of the rotor causes that the bearing means start to rotate and prevent damage to the rotor. Also in this embodiment, it is essential that the bearing means used are rollers, or the like, mounted on bearings in relation to the centre of rotation and having a low mass inertia and frictional couple. For the axial bearing, these bearing means are placed substantially in the same plane which is substantially perpendicular to the longitudinal direction of the shaft. It is obvious that the axial trunnion bearing 1 can, in some applications, also be placed at the end of the shaft, wherein the end of the shaft is used as the planar surface A1.

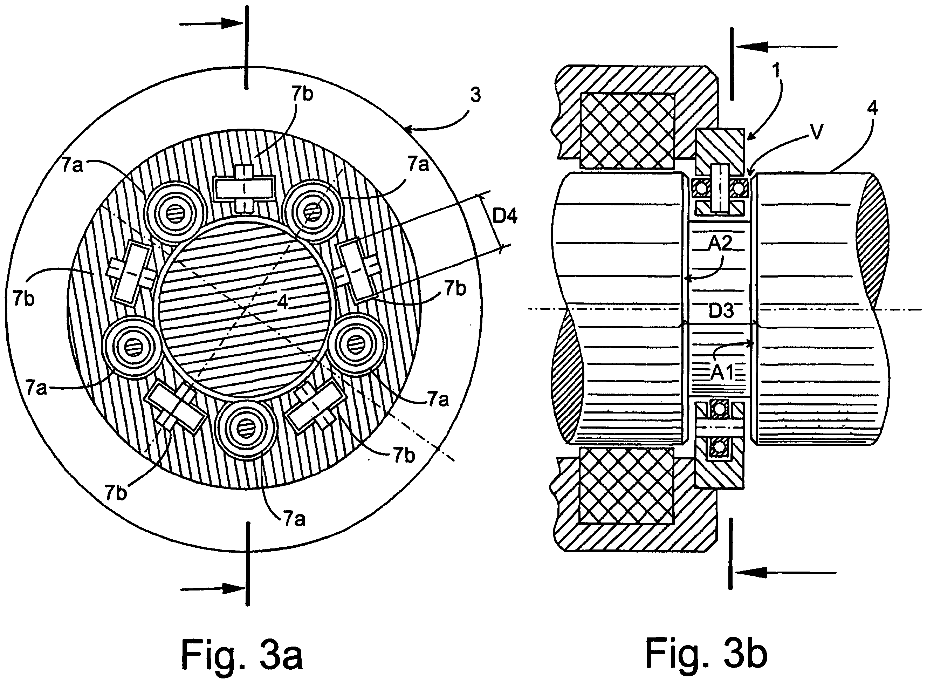

Furthermore, Figs. 3a and 3b show the structure of a trunnion bearing 1 according to a third advantageous embodiment of the invention. The trunnion bearing 1 is arranged to provide bearing both in the radial and the axial directions in situations, in which the magnetic bearings are not in operation or they cannot sufficiently prevent the movement of the shaft in the the radial and/or axial direction. The trunnion bearing 1 comprises a first set 7a of bearing means 7 as well as a second set 7b of bearing means 7. Also in this embodiment, these bearing means 7 are mounted on bearings at their centre of rotation, as presented above in this description. The first set 7a of bearing means is used for trunnion bearing in the radial direction, wherein these bearing means are placed on the circumference of substantially the same circle in such a way that the largest diameter of the imaginary circle within the bearing means system is greater than the diameter D1 of the shaft 4 at said bearing point. Thus, not more than two bearing means 7 of the first set 7a are simultaneously in contact with the shaft 4.

In a corresponding manner, the second set 7b of bearing means 7 is used for the trunnion bearing in the axial direction. These bearing means are placed in such a way that the centres of rotation of the bearing means are placed substantially in the same plane which is substantially parallel to the longitudinal direction of the shaft 4. In the arrangement of Figs. 3a and 3b, the shaft 4 is provided with a groove or the like, which comprises two substantially planar surfaces A1, A2. The distance D3 between these planar surfaces is slightly greater than the diameter D4 of the bearing means of the second set 7b. Thus, in the normal situation, a small clearance V is formed between the bearing means and the planar surfaces A1, A2. When the shaft 4 is displaced in the axial direction, the clearance V is reduced in the direction of the displacement, until the bearing means 7 of the second set 7b touch the plane A1, A2 in the direction of the displacement of the shaft. Thus, the bearing means 7 prevent the displacement of the shaft further away from this specific point, and damage to the rotor can be prevented. This arrangement has, for example, the advantage that only one trunnion bearing assembly is needed in the axial direction.

The trunnion bearing 1 comprises a supporting structure 9 to which the bearing means of both the first set 7a and the second set 7b are coupled in a rotating manner, for example by arrangements of the roller bearing type. In an application of the trunnion bearing 1 according to this third advantageous embodiment of the invention, the bearing means 7 of the second set 7b are placed in such a way that their centre is located on the circumference of substantially the same circle where the centres of rotation of the bearing means 7 of the first set 7a are located. Furthermore, all the bearing means are preferably placed at substantially even intervals. Thus, in the arrangement of Fig. 3a, in which each set 7a, 7b of bearing means comprises 5 bearing means, the angle between adjacent bearing means will be 36°.

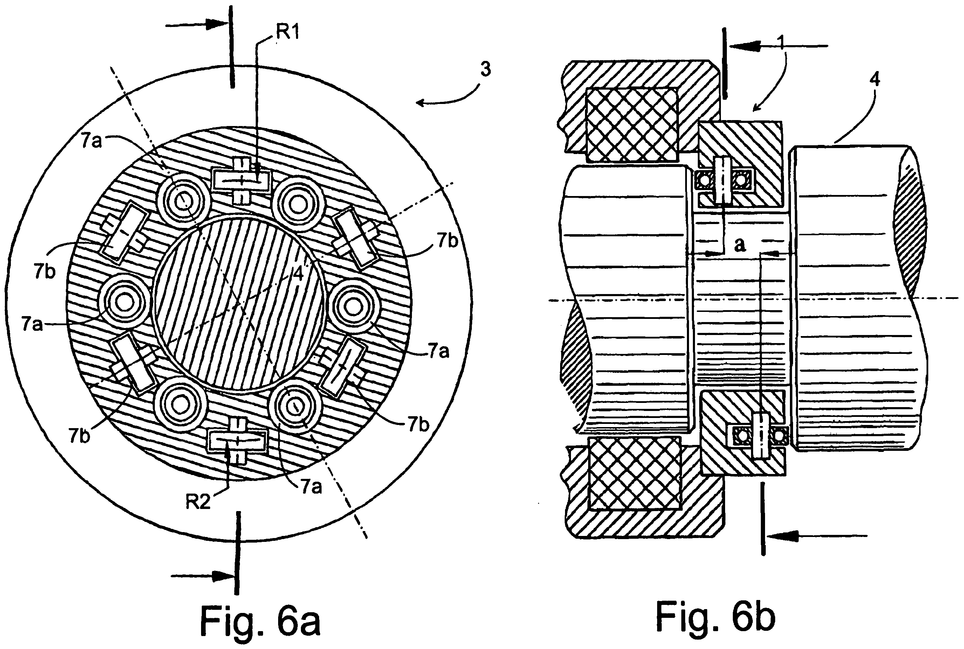

Furthermore, Figs. 6a and 6b show the structure of a trunnion bearing 1 according to a fourth advantageous embodiment of the invention. This structure differs from the structure of Figs. 3a and 3b primarily in that the second set 7b of bearing means arranged for bearing in the axial direction are not in the same plane, but the second set 7b of bearing means is further divided into at least a first group and a second group. Thus, the bearing means of the first group are placed in a different plane than the bearing means of the second group. Furthermore, the bearing means of the first group can be placed on a different circumference (at a different distance from the centre of the movement range of the shaft) than the bearing means of the second group. These different distances are indicated with references R1 and R2 in Fig. 6a. In a corresponding manner, the distance between said planes is indicated with reference a in Fig. 6b. It is obvious that in the trunnion bearing 1 according to this advantageous embodiment, the bearing means of the axial direction can also be placed in more planes than said first and second planes. This embodiment is particularly advantageous in such applications in which the axial forces effective on the rotor change their direction at random, at a random frequency, when the trunnion bearing is in operation. Thus, the bearing means 7b of the axial direction do not change their direction of rotation when the direction of the axial force is changed. Furthermore, by the trunnion bearing according to this embodiment, it is possible to implement random total thicknesses of the axial bearing, still using bearing means of standart dimensions.

Although it was presented above that the bearing means 7 are rollers, it will be obvious that other pieces which are symmetrical in relation to their centre of rotation can be used as well. Some examples to be mentioned include a cylinder which is thicker at its middle part than at its ends (a barrel), and a ball. In said pieces, the bearing can be arranged, for example, in such a way that the pieces are provided with a shaft which can be separately mounted on bearings in the support structure 9.

The advantageousness of the bearing means 7a, 7b of the roller type is based, for example, on the fact that their frictional couple and thereby also the circumferential load on the rotor forcing it to a rotating movement, is only slightly dependent on the load. In unlubricated slide bearing structures, however, the frictional force is approximately directly proportional to the load.

It is obvious that the bearing means of the axial direction do not need to be placed on the same circumference, but each bearing means 7b of the axial direction may be placed on a separate circumference. This applies also to the above-mentioned bearing structure 1 according to the fourth advantageous embodiment, where some or all of the bearing means of the first group may be placed on different circumferences than the other bearing means of the first group and, respectively, some or all of the bearing means of the second group may be placed on different circumferences than the other bearing means of the second group.

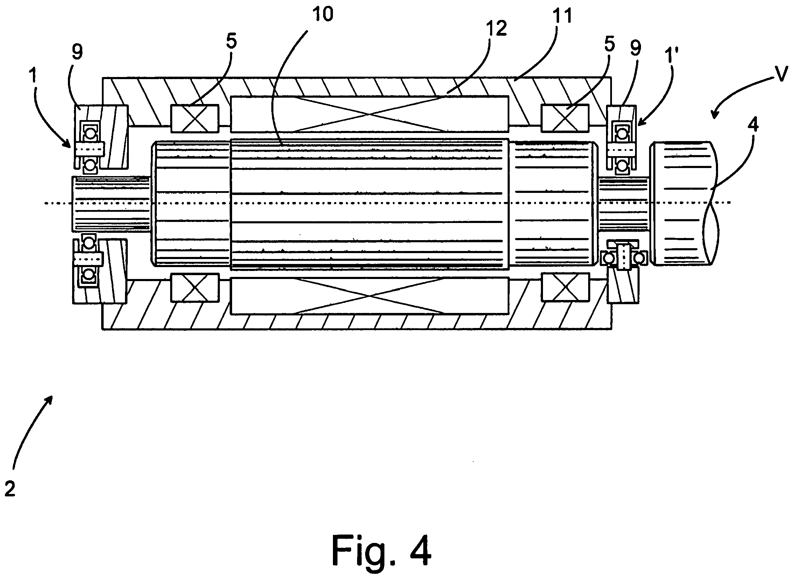

Figure 4 shows yet another electric machine 2 applying the trunnion bearing assembly according to the invention. The electric machine 2 comprises a rotor 3 provided with a shaft 4 and a rotor winding 10. Furthermore, the electric machine is provided with a stator 11 comprising, for example, a stator winding 12. Trunnion bearings 1, 1' are coupled to the stator 11. The first trunnion bearing 1 is intended for use as a block stop against radial displacements of the shaft 4. In the second trunnion bearing 1', both the radial and the axial trunnion bearing are combined, wherein this second trunnion bearing 1' is used as a block stop against displacements of the shaft 4 in the radial and axial directions. The trunnion bearings 1, 1' are coupled between support structures 9, 9' and the stator 11 or another frame element in the electric machine (not shown). Further, Fig. 4 shows, in a reduced manner, magnetic bearings 5, by which the actual contactless bearing is to be provided.

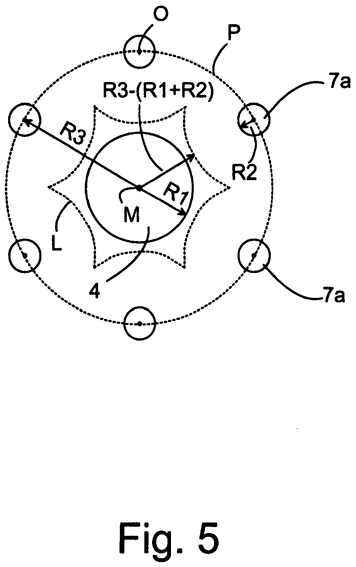

The rotationally symmetrical pieces, or bearing means 7a, to be used for the radial bearing of the trunnion bearings 1, are placed substantially symmetrically around the rotor 3 (or its shaft 4) in such a way that they define a polygonal area as the range of movement for the centre of rotation of the rotor. The centre of this polygon is substantially at the centre of the rotor shaft 4 in a situation in which the rotor 3 is placed in its aimed position, substantially at the centre of the area defined by the stator. Thus, the distance between the rotor and the stator is optimal in view of possible impacts on the rotor. The imaginary sides of the polygon can be straight or curved. In Fig. 5, a broken line L illustrates a theoretical polygon limiting an area, inside which the centre M of the shaft 4 may move in an advantageous embodiment. In this embodiment, the trunnion bearing 1,1' comprises six bearing means 7a for radial bearing. From the figure, it can be seen that the sides of the polygon L (in this case a hexagon) are curved and that theoretically the shortest distance between the side and the centre of the polygon is determined on the basis of three radii R1, R2, R3 in such a way that this shortest distance is R3 - (R1 + R2). Of these radii, the first one R1 indicates the radius of the rotor (or its shaft 4) at the bearing point. The second radius R2 is the radius of the bearing means. The third radius is the diameter of the imaginary circumference P of a circle, on which the centres O of the bearing means 7a are located. Although the sides of the polygon L can be curved, in practice, at high rotational speeds, the path of the centre of the rotor is limited to a polygon with straight sides.

The above-described principle of symmetry can also be applied in an application in which the trunnion bearing 1, 1' comprises both the bearing means 7a implementing the bearing in the radial direction and the bearing means 7b implementing the bearing in the axial direction. Thus, the bearing means 7a implementing the bearing in the radial direction are placed substantially symmetrically on the same circumference. In a corresponding manner, the bearing means 7b implementing the bearing in the axial direction are placed substantially symmetrically on the same circumference, which does not, however, need to be the same as that of the bearing means 7a implementing the bearing in the radial direction. Consequently, the bearing means 7b to be used for bearing in the axial direction can be placed on the circumference of a circle whose diameter is unequal to the circumference of the imaginary circle for the placement of the bearing means 7a to be used for bearing in the radial direction.

It is obvious that the present invention is not limited solely to the above-presented embodiments but it can be modified within the scope of the appended claims.

## Claims

1. A trunnion bearing assembly (1) for the safety bearing of a high-speed electric machine (2), which high-speed electric machine (2) comprises a rotor (3) arranged to be rotatable, a stator (11), and at least one contactless bearing (5) for bearing during the use of the high-speed electric machine, which trunnion bearing assembly (1) comprises at least three rotationally symmetrical bearing means (7) which are mounted on bearings in relation to their centre of rotation, and that said at least three rotationally symmetrical bearing means (7) are placed around a shaft (4) substantially symmetrically so that the centre of rotation of the bearing means (7) is placed on the circumference of substantially the same circle (P) in such a way that the diameter of the largest imaginary circle inside the bearing means is greater than the diameter of the shaft (4) at the bearing means (7), **characterized in that** at least some (7b) of the centres of rotation of the bearing means (7) are arranged in substantially constant locations in the trunnion bearing assembly (1), and at least some (7b) of the bearing means (7) are arranged to limit the movement of the shaft (4) in the axial direction, and that the bearing means (7b) limiting the movement in the axial direction comprise at least a first set (7b) of bearing means in such a way that the centre of rotation of the first set (7b) of bearing means is placed in substantially the same first plane.

2. The trunnion bearing assembly according to claim 1, **characterized in that** the bearing means (7) comprise a second set of bearing means (7b), whose centre of rotation is placed in a plane different from the first plane in the axial direction.

3. The trunnion bearing assembly according to claim 1, in which the bearing means (7b) limiting the movement in the axial direction are placed around the shaft (4) in such a way that the centre of rotation of all the bearing means (7b) limiting the movement in the axial direction is placed in substantially the same plane, substantially perpendicular to the longitudinal direction of the shaft, **characterized in that** the shaft (4) is provided with at least one planar surface (A1), that the bearing means of the first set (7b), limiting the movement in the axial direction, are placed close to said planar surface in such a way that the centres of rotation of the bearing means of the first set (7b), limiting the movement in the axial direction, are placed on the circumference (P) of substantially the same circle, and that the diameter of the circle is smaller than the diameter of said planar surface.

4. The trunnion bearing assembly according to claim 1, **characterized in that** some (7a) of the bearing means (7) are arranged to limit the movement of the shaft (4) in the radial direction, wherein at least the bearing means (7a) limiting the movement in the radial direction are placed around the shaft (4) in such a way that the centres of rotation of all the bearing means (7a) limiting the movement in the radial direction are placed on the circumference of substantially the same circle (P) in such a way that said bearing means (7a) limiting the movement in the radial direction define the range of movement of the rotor in the radial direction to be a polygon, and that some (7b) of the bearing means (7) are arranged to limit the movement of the shaft (4) in the axial direction, wherein the bearing means (7b) limiting the movement in the axial direction are placed around the shaft (4) in such a way that the centres of rotation of all the bearing means (7b) limiting the movement in the axial direction are placed in substantially the same plane, substantially perpendicular to the longitudinal direction of the shaft.

5. The trunnion bearing assembly according to claim 4, **characterized in that** the sides of said polygon are substantially straight.

6. The trunnion bearing assembly according to claim 4, **characterized in that** the sides of said polygon are curved.

7. The trunnion bearing assembly according to any of the claims 1 to 6, **characterized in that** the mass inertia and the frictional couple of the bearing means (7) are low.

8. The trunnion bearing assembly according to claim 7, **characterized in that** the bearing means (7) are ball bearings, single-row angular ball bearings, and/or radially loaded cylindrical roller bearings with holders.

9. A high-speed electric machine (2) comprising a trunnion bearing assembly (1) for the safety bearing of the high-speed electric machine (2), a rotor (3) arranged to be rotatable, a stator (11), and at least one contactless bearing (5) for bearing during the operation of the high-speed electric machine, which trunnion bearing assembly (1) comprises at least three rotationally symmetrical bearing means (7) which are mounted on bearings in relation to their centres of rotation, and that said at least three rotationally symmetrical bearing means (7) are placed around a shaft (4) substantially symmetrically so that the centres of rotation of the bearing means (7) are placed on the circumference of substantially the same circle (P) in such a way that the diameter of the largest imaginary circle inside the bearing means is greater than the diameter of the shaft (4) at the bearing means (7), **characterized in that** at least some (7b) of the centres of rotation of the bearing means (7) are arranged in substantially constant locations in the trunnion bearing assembly (1), and at least some (7b) of the bearing means (7) are arranged to limit the movement of the shaft (4) in the axial direction, and that the bearing means (7b) limiting the movement in the axial direction comprise at least a first set (7b) of bearing means in such a way that the centres of rotation of the first set (7b) of bearing means are placed in substantially the same first plane.

10. The high-speed electric machine according to claim 9, **characterized in that** the bearing means (7) comprise a second set of bearing means (7b), whose centres of rotation are placed in a plane different from the first plane in the axial direction.

11. A method for the safety bearing of a high-speed electric machine (2) by means of a trunnion bearing assembly (1), which high-speed electric machine (2) comprises a rotor (3) arranged to be rotatable in relation to a shaft (4), a stator (11), and at least one contactless bearing (5) for bearing during the operation of the high-speed electric machine, in which method the trunnion bearing (1) is provided by means of at least three rotationally symmetrical bearing means (7) which are mounted on bearings in relation to their centre of rotation, and that said at least three rotationally symmetrical bearing means (7) are placed around the shaft (4) substantially symmetrically in such a way that the centre of the bearing means (7) is placed on the circumference (P) of substantially the same circle in such a way that the diameter of the largest imaginary circle inside the bearing means (7) is greater than the diameter of the shaft (4) at the bearing means (7), **characterized in that** at least some (7b) of the centres of rotation of the bearing means (7) are arranged at substantially constant places in the trunnion bearing assembly (1), and at least some (7b) of the bearing means (7) are used to limit the movement of the shaft (4) in the axial direction, and that of the bearing means (7b) limiting the movement in the axial direction, at least a first set of bearing means (7b) is provided, whose centre of rotation is placed in substantially the same first plane.

12. The method according to claim 11, **characterized in that** of the bearing means (7), a second set of bearing means (7b) is provided, whose centre of rotation is placed in a plane different from the first plane in the axial direction.

13. The method according to claim 10 or 11, **characterized in that** at least some (7a) of the bearing means (7) are used to limit the movement of the shaft (4) in the radial direction, wherein the bearing means (7a) limiting the movement in the radial direction are placed around the shaft (4) in such a way that the centres of rotation of all the bearing means (7a) limiting the movement in the radial direction are placed on the circumference of substantially the same circle in such a way that the diameter of the largest imaginary circle inside the bearing means (7) is greater than the diameter of the shaft (4) at the bearing means (7).

14. The method according to claim 11, **characterized in that** at least some (7b) of the bearing means are used to limit the movement of the shaft (4) in the axial direction, wherein the bearing means (7b) limiting the movement in the axial direction are placed around the shaft (4) in such a way that the centres of rotation of all the bearing means (7b) limiting the movement in the axial direction are placed in substantially the same plane, substantially perpendicular to the longitudinal direction of the shaft.

## Patentansprüche

1. Zapfenlagerbaugruppe (1) für die Sicherheitslagerung einer Elektromaschine (2) mit hoher Drehzahl, wobei die Elektromaschine (2) mit hoher Drehzahl einen Rotor (3), der rotierbar angeordnet ist, einen Stator (11) und zumindest ein kontaktloses Lager (5) zum Lagern während des Gebrauchs der Maschine mit hoher Drehzahl umfasst, wobei die Zapfenlagerbaugruppe (1) zumindest drei rotatorisch symmetrische Lagermittel (7) umfasst, die an Lagern in Bezug auf ihr Rotationszentrum montiert sind, und dass die zumindest drei rotatorisch symmetrischen Lagermittel (7) um eine Welle (4) im Wesentlichen symmetrisch angeordnet sind, so dass das Rotationszentrum der Lagermittel 7 an dem Umfang des im Wesentlichen selben Kreises (P) auf solche Weise angeordnet ist, dass der Durchmesser des größten imaginären Kreises innerhalb der Lagermittel größer als der Durchmesser der Welle (4) an den Lagermitteln (7) ist, **dadurch gekennzeichnet, dass** zumindest einige (7b) der Rotationszentren der Lagermittel (7) in im Wesentlichen konstanten Orten in der Zapfenlagerbaugruppe (1) angeordnet sind, und zumindest einige (7b) der Lagermittel (7) angeordnet sind, um die Bewegung der Welle (4) in der Axialrichtung zu beschränken, und dass die Lagermittel (7b), die die Bewegung in der Axialrichtung beschränken, zumindest einen ersten Satz (7b) von Lagermitteln auf solche Weise umfassen, dass das Rotationszentrum des ersten Satzes (7b) von Lagermitteln im Wesentlichen in derselben ersten Ebene platziert ist.

2. Zapfenlagerbaugruppe nach Anspruch 1, **dadurch gekennzeichnet, dass** die Lagermittel (7) einen zweiten Satz von Lagermitteln (7b) umfassen, deren Rotationszentrum in einer Ebene platziert ist, die von der ersten Ebene in der Axialrichtung verschieden ist.

3. Zapfenlagerbaugruppe nach Anspruch 1, wobei die Lagermittel (7b), die die Bewegung in der Axialrichtung beschränken, um die Welle (4) auf solche Weise angeordnet sind, dass das Rotationszentrum aller Lagermittel (7b), die die Bewegung in der Axialrichtung begrenzen, im Wesentlichen in derselben Ebene im Wesentlichen rechtwinklig zu der Längsrichtung der Welle platziert sind, **dadurch gekennzeichnet, dass** die Welle (4) mit zumindest einer planaren Fläche (A1) versehen ist, dass die Lagermittel des ersten Satzes (7b), die die Bewegung in der Axialrichtung beschränken, nahe der planaren Fläche auf gleiche Weise platziert sind, dass die Rotationszentren der Lagermittel des ersten Satzes (7b), die die Bewegung in der Axialrichtung beschränken, an dem Umfang (P) des im Wesentlichen selben Kreises platziert sind, und dass der Durchmesser des Kreises kleiner als der Durchmesser der planaren Fläche ist.

4. Zapfenlagerbaugruppe nach Anspruch 1, **dadurch gekennzeichnet, dass** einige (7a) der Lagermittel (7) so angeordnet sind, die Bewegung der Welle (4) in der Richtung zu beschränken, wobei zumindest die Lagermittel (7a), die die Bewegung in der Radialrichtung beschränken, um die Welle (4) so angeordnet sind, dass die Rotationszentren aller Lagermittel (7a), die die Bewegung in der Radialrichtung beschränken, an dem Umfang von im Wesentlichen demselben Kreis (P) auf solche Weise platziert sind, dass die Lagermittel (7a), die die Bewegung in der Radialrichtung beschränken, den Bewegungsbereich des Rotors in der Radialrichtung auf ein Polygon festlegen, und dass einige (7b) der Lagermittel (7) so angeordnet sind, die Bewegung der Welle (4) in der Axialrichtung zu beschränken, wobei die Lagermittel (7b), die die Bewegung in der Axialrichtung beschränken, um die Welle (4) auf solche Weise angeordnet sind, dass die Rotationszentren aller Lagermittel (7b), die die Bewegung in der Axialrichtung beschränken, im Wesentlichen in derselben Ebene im Wesentlichen rechtwinklig zu der Längsrichtung der Welle platziert sind.

5. Zapfenlagerbaugruppe nach Anspruch 4, **dadurch gekennzeichnet, dass** die Seiten des Polygons im Wesentlichen gerade sind.

6. Zapfenlagerbaugruppe nach Anspruch 4, **dadurch gekennzeichnet, dass** die Seiten des Polygons gekrümmt sind.

7. Zapfenlagerbaugruppe nach einem der Ansprüche 1 bis 6, **dadurch gekennzeichnet, dass** die Massenträgheit und die Reibungspaarung der Lagermittel (7) niedrig sind.

8. Zapfenlagerbaugruppe nach Anspruch 7, **dadurch gekennzeichnet, dass** die Lagermittel (7) Kugellager, einreihige winkelige Kugellager und/oder radial belastete Zylinderwälzlager mit Haltern sind.

9. Elektromaschine (2) mit hoher Drehzahl, mit einer Zapfenlagerbaugruppe (1) für die Sicherheitslagerung der Elektromaschine (2) mit hoher Drehzahl, einem Rotor (3), der rotierbar angeordnet ist, einem Stator (11) und zumindest einem kontaktlosen Lager (5) zum Lagern während des Betriebs der Elektromaschine mit hoher Drehzahl, wobei die Zapfenlagerbaugruppe (1) zumindest drei rotatorisch symmetrische Lagermittel (7) umfasst, die an Lagern in Bezug auf ihre Rotationszentren montiert sind, und dass die zumindest drei rotatorisch symmetrischen Lagermittel (7) um eine Welle (4) im Wesentlichen symmetrisch angeordnet sind, so dass die Rotationszentren der Lagermittel (7) an dem Umfang von im Wesentlichen demselben Kreis (P) auf solche Weise platziert sind, dass der Durchmesser des größten imaginären Kreises innerhalb der Lagermittel größer als der Durchmesser der Welle (4) an den Lagermitteln (7) ist, **dadurch gekennzeichnet, dass** zumindest einige (7b) der Rotationszentren der Lagermittel (7) an im Wesentlichen konstanten Orten in der Zapfenlagerbaugruppe (1) angeordnet sind und zumindest einige (7b) der Lagermittel (7) angeordnet sind, um die Bewegung der Welle (4) in der Axialrichtung zu begrenzen, und dass die Lagermittel (7b), die die Bewegung in der Axialrichtung begrenzen, zumindest einen ersten Satz (7b) von Lagermitteln auf solche Weise umfassen, dass die Rotationszentren des ersten Satzes (7b) von Lagermitteln in im Wesentlichen derselben ersten Ebene platziert sind.

10. Elektromaschine mit hoher Drehzahl nach Anspruch 9, **dadurch gekennzeichnet, dass** die Lagermittel (7) einen zweiten Satz von Lagermitteln (7b) umfassen, deren Rotationszentren in einer Ebene angeordnet sind, die von der ersten Ebene in der Axialrichtung verschieden ist.

11. Verfahren für die Sicherheitslagerung einer Elektromaschine (2) mit hoher Drehzahl mittels einer Zapfenlagerbaugruppe (1), wobei die Elektromaschine (2) mit hoher Drehzahl einen Rotor (3), der rotierbar in Bezug auf eine Welle (4) angeordnet ist, einen Stator (11) und zumindest ein kontaktloses Lager (5) zum Lagern während des Betriebs der Elektromaschine mit hoher Drehzahl umfasst, wobei bei dem Verfahren das Zapfenlager (1) mit zumindest drei rotatorisch symmetrischen Lagermitteln (7) versehen wird, die an Lagern in Bezug auf ihre Rotationszentren montiert sind, und dass die zumindest drei rotatorisch symmetrischen Lagermittel (7) um die Welle (4) im Wesentlichen symmetrisch auf solche Weise platziert werden, dass das Zentrum der Lagermittel (7) an dem Umfang (P) von im Wesentlichen demselben Kreis auf solche Weise angeordnet wird, dass der Durchmesser des größten imaginären Kreises innerhalb der Lagermittel (7) größer als der Durchmesser der Welle (4) an den Lagermitteln (7) ist, **dadurch gekennzeichnet, dass** zumindest einige (7b) der Rotationszentren der Lagermittel (7) an im Wesentlichen konstanten Plätzen in der Zapfenlagerbaugruppe (1) angeordnet sind und zumindest einige (7b) der Lagermittel (7) verwendet sind, um die Bewegung der Welle (4) in der Axialrichtung zu beschränken, und dass von den Lagermitteln (7b), die die Bewegung in der Axialrichtung beschränken, zumindest ein erster Satz von Lagermitteln (7b) vorgesehen ist, deren Rotationszentren in im Wesentlichen derselben ersten Ebene platziert sind.

12. Verfahren nach Anspruch 11, **dadurch gekennzeichnet, dass** von den Lagermitteln (7) ein zweiter Satz von Lagermitteln (7b) vorgesehen werden, deren Rotationszentren in einer Ebene platziert sind, die von der ersten Ebene in der Axialrichtung verschieden ist.

13. Verfahren nach einem der Ansprüche 10 oder 11, **dadurch gekennzeichnet, dass** zumindest einige (7a) der Lagermittel (7) verwendet werden, um die Bewegung der Welle (4) in der Radialrichtung zu beschränken, wobei die Lagermittel (7a), die die Bewegung in der Radialrichtung beschränken, um die Welle (4) auf solche Weise platziert sind, dass die Rotationszentren aller Lagermittel (7a), die die Bewegung in der Radialrichtung beschränken, an dem Umfang von im Wesentlichen demselben Kreis platziert sind, so dass der Durchmesser des größten imaginären Kreises innerhalb der Lagermittel (7) größer als der Durchmesser der Welle (4) an den Lagermitteln (7) ist.

14. Verfahren nach Anspruch 11, **dadurch gekennzeichnet, dass** zumindest einige (7b) der Lagermittel verwendet sind, die Bewegung der Welle (4) in der Axialrichtung zu beschränken, wobei die Lagermittel (7b), die die Bewegung in der Axialrichtung beschränken, um die Welle (4) so angeordnet sind, dass die Rotationszentren aller Lagermittel (7b), die die Bewegung in der Axialrichtung beschränken, in im Wesentlichen derselben Ebene im Wesentlichen rechtwinklig zu der Längsrichtung der Welle platziert sind.

## Revendications

1. Ensemble de palier de tourillon (1) pour le support de sécurité d'une machine électrique à grande vitesse (2), laquelle machine électrique à grande vitesse (2) comprend un rotor (3) agencé pour être rotatif, un stator (11), et au moins un palier sans contact (5) pour le support pendant l'utilisation de la machine électrique à grande vitesse, lequel ensemble de palier de tourillon (1) comprend au moins trois moyens de palier (7) symétriques en rotation qui sont montés sur des paliers par rapport à leur centre de rotation, et lesdits au moins trois moyens de palier symétriques en rotation (7) sont placés autour d'un arbre (4) de façon sensiblement symétrique de sorte que les centres de rotation des moyens de palier (7) sont sensiblement placés sur la circonférence d'un même cercle (P) de sorte que le diamètre du cercle imaginaire le plus grand à l'intérieur des moyens de palier est supérieur au diamètre de l'arbre (4) au niveau des moyens de palier (7), **caractérisé en ce qu'**au moins une partie (7b) des centres de rotation des moyens de palier (7) sont agencés à des emplacements sensiblement constants dans l'ensemble de palier de tourillon (1), et au moins un partie (7b) des moyens de palier (7) sont agencés pour limiter le déplacement de l'arbre (4) dans la direction axiale, et **en ce que** les moyens de palier (7b) limitant le déplacement dans la direction axiale comprennent au moins un premier ensemble (7b) de moyens de palier de telle sorte que le centre de rotation du premier ensemble (7b) de moyens de palier est placé sensiblement dans le même premier plan.

2. Ensemble de palier de tourillon selon la revendication 1, **caractérisé en ce que** les moyens de palier (7) comprennent un second ensemble de moyens de palier (7b) dont le centre de rotation est placé dans un plan différent du premier plan dans la direction axiale.

3. Ensemble de palier de tourillon selon la revendication 1, dans lequel les moyens de palier (7b) limitant le déplacement dans la direction axiale sont placés autour de l'arbre (4) de telle sorte que les centres de rotation de tous les moyens de palier (7b) limitant le déplacement dans la direction axiale sont placés sensiblement dans le même plan, sensiblement perpendiculaire à la direction longitudinale de l'arbre, **caractérisé en ce que** l'arbre (4) est muni d'au moins une surface plane (A1), **en ce que** les moyens de palier du premier ensemble (7b) limitant le déplacement dans la direction axiale, sont placés à proximité de ladite surface plane de telle sorte que les centres de rotation des moyens de palier du premier ensemble (7b), limitant le déplacement dans la direction axiale, sont placés sur la circonférence (P) sensiblement du même cercle, et que le diamètre du cercle est plus petit que le diamètre de ladite surface plane.

4. Ensemble de palier de tourillon selon la revendication 1, **caractérisé en ce que** certains (7a) des moyens de palier (7) sont agencés pour limiter le déplacement de l'arbre (4) dans la direction radiale, dans lequel au moins les moyens de palier (7a) limitant le déplacement dans la direction radiale sont placés autour de l'arbre (4) de telle sorte que les centres de rotation de tous les moyens de palier (7a) limitant le déplacement dans la direction radiale sont sensiblement placés sur la circonférence du même cercle (P) de telle manière que lesdits moyens de palier (7a) limitant le déplacement dans la direction radiale définissent la plage de déplacement du rotor dans la direction radiale comme un polygone, et **en ce que** certains (7b) des moyens de palier (7) sont agencés pour limiter le déplacement de l'arbre (4) dans la direction axiale, dans lequel les moyens de palier (7b) limitant le déplacement dans la direction axiale sont placés autour de l'arbre (4) de telle sorte que les centres de rotation de tous les moyens de palier (7b) limitant le déplacement dans la direction axiale sont sensiblement placés dans le même plan, sensiblement perpendiculaire à la direction longitudinale de l'arbre.

5. Ensemble de palier de tourillon selon la revendication 4, **caractérisé en ce que** les côtés dudit polygone sont sensiblement rectilignes.

6. Ensemble de palier de tourillon selon la revendication 4, **caractérisé en ce que** les côtés dudit polygone sont incurvés.

7. Ensemble de palier de tourillon selon l'une quelconque des revendications 1 à 6, **caractérisé en ce que** l'inertie de masse et le couple de frottement des moyens de palier (7) sont faibles.

8. Ensemble de palier de tourillon selon la revendication 7, **caractérisé en ce que** les moyens de palier (7) sont des roulements à billes, des roulements à billes inclinés à rangée unique et/ou des paliers à rouleaux cylindriques chargés radialement avec des supports.

9. Machine électrique à grande vitesse (2) comprenant un ensemble de palier de tourillon (1) pour le palier de sécurité d'une machine électrique à grande vitesse (2), un rotor (3) agencé pour être rotatif, un stator (11), et au moins un palier sans contact (5) pour le support pendant le fonctionnement de la machine électrique à grande vitesse, lequel ensemble de palier de tourillon (1) comprend au moins trois moyens de palier (7) symétriques en rotation qui sont montés sur des paliers par rapport à leurs centres de rotation, et lesdits au moins trois moyens de palier (7) symétriques en rotation sont placés autour d'un arbre (4) de façon sensiblement symétrique de sorte que les centres de rotation des moyens de palier (7) sont placés sensiblement sur la circonférence du même cercle (P) de sorte que le diamètre du cercle imaginaire le plus grand à l'intérieur des moyens de palier est supérieur au diamètre de l'arbre (4) au niveau des moyens de palier (7), **caractérisée en ce qu'**au moins certains (7b) des centres de rotation des moyens de palier (7) sont agencés à des emplacements sensiblement constants dans l'ensemble de palier de tourillon (1), et au moins certains (7b) des moyens de palier (7) sont agencés pour limiter le déplacement de l'arbre (4) dans la direction axiale, et **en ce que** les moyens de palier (7b) limitant le déplacement dans la direction axiale comprennent au moins un premier ensemble (7b) de moyens de palier de telle sorte que les centres de rotation du premier ensemble (7b) de moyens de palier sont placés sensiblement dans le même premier plan.

10. Machine électrique à grande vitesse selon la revendication 9, **caractérisée en ce que** les moyens de palier (7) comprennent un second ensemble de moyens de palier (7b) dont les centres de rotation sont placés dans un plan différent du premier plan dans la direction axiale.

11. Procédé pour le support de sécurité d'une machine électrique à grande vitesse (2) au moyen d'un ensemble de palier de tourillon (1), laquelle machine électrique à grande vitesse (2) comprend un rotor (3) agencé pour être rotatif, un stator (11), et au moins un palier sans contact (5) pour le support pendant le fonctionnement de la machine électrique à grande vitesse, dans lequel procédé l'ensemble de palier de tourillon (1) est fourni par l'intermédiaire d'au moins trois moyens de palier (7) symétriques en rotation qui sont montés sur des paliers par rapport à leur centre de rotation, et lesdits au moins trois moyens de palier (7) symétriques en rotation sont placés autour d'un arbre (4) de façon sensiblement symétrique de sorte que les centres de rotation des moyens de palier (7) sont sensiblement placés sur la circonférence du même cercle (P) de sorte que le diamètre du cercle imaginaire le plus grand à l'intérieur des moyens de palier (7) est supérieur au diamètre de l'arbre (4) au niveau des moyens de palier (7), **caractérisé en ce qu'**au moins certains (7b) des centres de rotation des moyens de palier (7) sont agencés à des emplacements sensiblement constants dans l'ensemble de palier de tourillon (1), et qu'au moins certains (7b) des moyens de palier (7) sont utilisés pour limiter le déplacement de l'arbre (4) dans la direction axiale, et **en ce que** les moyens de palier (7b) limitant le déplacement dans la direction axiale comprennent au moins un premier ensemble de moyens de palier (7b), dont le centre de rotation est placé sensiblement dans le même premier plan.

12. Procédé selon la revendication 11, **caractérisé en ce que** les moyens de palier (7) comprennent un second ensemble de moyens de palier (7b) dont le centre de rotation est placé dans un plan différent du premier plan dans la direction axiale.

13. Procédé selon la revendication 10 ou 11, **caractérisé en ce qu'**au moins une partie (7a) des moyens de palier (7) est utilisée pour limiter le déplacement de l'arbre (4) dans la direction radiale, dans lequel les moyens de palier (7a) limitant le déplacement dans la direction radiale sont placés autour de l'arbre (4) de telle sorte que les centres de rotation de tous les moyens de palier (7a) limitant le déplacement dans la direction radiale sont placés sur la circonférence sensiblement du même cercle de telle sorte que le diamètre du cercle imaginaire le plus grand à l'intérieur des moyens de palier (7) est supérieur au diamètre de l'arbre (4) au niveau des moyens de palier (7).

14. Procédé selon la revendication 11, **caractérisé en ce qu'**au moins certains (7b) des moyens de palier sont utilisés pour limiter le déplacement de l'arbre (4) dans la direction axiale, dans lequel les moyens de palier (7b) limitant le déplacement dans la direction axiale sont placés autour de l'arbre (4) de telle sorte que les centres de rotation de tous les moyens de palier (7b) limitant le déplacement dans la direction axiale soient placés sensiblement dans le même plan, sensiblement perpendiculaire à la direction longitudinale de l'arbre.
